# EUROPÄISCHE PATENTSCHRIFT

(11) **EP 1 778 995 B1**
(45) Veröffentlichungstag und Bekanntmachung des Hinweises auf die Patenterteilung: **15.10.2008**
(21) Anmeldenummer: 05787120.4
(22) Anmeldetag: 05.08.2005
(51) Int. Cl.: F16D 27/00, F16D 27/112, F16D 27/06

(54) **ELEKTROMAGNETISCHE REIBSCHLÜSSIGE SCHALTKUPPLUNG, VERFAHREN ZU IHREM BETRIEB UND VERWENDUNG INNERHALB EINES ANTRIEBSSTRANGES ZUR AUTOMATISCHEN BETÄTIGUNG EINER FAHRZEUGTÜR ODER FAHRZEUGKLAPPE**
ELECTROMAGNETIC FRICTIONALLY ENGAGED CLUTCH, METHOD FOR THE OPERATION THEREOF, AND USE THEREOF IN A DRIVE TRAIN FOR AUTOMATICALLY ACTUATING A VEHICLE DOOR OR A VEHICLE FLAP
EMBRAYAGE ELECTROMAGNETIQUE ENTRAINE PAR FRICTION, PROCEDE PERMETTANT DE L'ACTIONNER ET UTILISATION DANS UNE CHAINE CINEMATIQUE POUR ASSURER L'ACTIONNEMENT AUTOMATIQUE D'UNE PORTIERE DE VEHICULE OU D'UN CAPOT/HAYON DE VEHICULE

(30) Priorität: 13.08.2004 DE 102004039264
(43) Veröffentlichungstag der Anmeldung: 02.05.2007
(73) Patentinhaber: Valeo Sicherheitssysteme GmbH, 85253 Erdweg (DE)
(72) Erfinder: SCHACHTL, Stephan, c/o VALEO SECURITE HABITACLE, F-94042 Créteil Cedex (FR); WINTER, Andreas, c/o VALEO SECURITE HABITACLE, F-94042 Créteil Cedex (FR); HUMEZ, Thomas, c/o VALEO SECURITE HABITACLE, F-94042 Créteil Cedex (FR); BERGER, Andreas, c/o VALEO SECURITE HABITACLE, F-94042 Créteil Cedex (FR)
(74) Vertreter: Croonenbroek, Thomas Jakob
(86) Internationale Anmeldenummer: PCT/EP2005/053864
(87) Internationale Veröffentlichungsnummer: WO 2006/018398

(56) Entgegenhaltungen:
- WO-A-03/104671
- DE-A1- 10 324 487
- DE-A1- 19 920 543

## Beschreibung

Die Erfindung betrifft eine elektromagnetische reibschlüssige Schaltkupplung, ein Verfahren zu ihrem Betrieb und eine Verwendung der Schaltkupplung innerhalb eines Antriebsstranges zur automatischen Betätigung einer Fahrzeugtür oder Fahrzeugklappe (Heckklappe, Motorhaube etc.).

Bekannte derartige Schaltkupplungen weisen sowohl ein mit einem Reibbelag versehenes und mit einer ersten Welle drehfest verbundenes Rotorteil, an dem auf der dem Reibbelag abgewandten Seite eine elektrische Spule angeordnet ist, als auch eine drehfest, aber axial verschiebbare mit einer zweiten Welle verbundene Ankerscheibe auf. Dabei wird im eingekuppelten Zustand von der ersten auf die zweite Welle ein vom Spulenstrom abhängiges Drehmoment übertragen. Will man daher den Kraftschluß zwischen den Wellen aufrechterhalten, muß ständig Strom durch die Spule der Schaltkupplung fließen.

Aus der DE 102 25 580 A1 ist eine elektromagnetische Schaltkupplung zur Verwendung innerhalb eines Antriebsstranges zur automatischen Betätigung der Heckklappe eines Kraftfahrzeuges bekannt, an dessen Rotorteil ein Permanentmagnet angeordnet ist. Dadurch wird erreicht, daß die Heckklappe des Kraftfahrzeuges in jeder Zwischenstellung sicher gehalten wird, wenn die Spule stromlos ist. Allerdings muß bei dieser Schaltkupplung durch die Spule ständig ein Strom fließen, um die Kupplung zu trennen. Eine im wesentlichen kraftfreie Notbetätigung der entsprechenden Heckklappe ist daher nicht möglich.

Der Erfindung liegt die Aufgabe zugrunde, eine elektromagnetische reibschlüssige Schaltkupplung anzugeben, deren Spule sowohl im eingekuppelten Zustand als auch im ausgekuppelten Zustand stromfrei sein kann. Ferner soll ein Verfahren zum Betrieb einer derartigen (bistabilen) Schaltkupplung als auch eine bevorzugte Verwendung der Schaltkupplung innerhalb eines Antriebsstranges zur automatischen Betätigung einer Fahrzeugtür oder Fahrzeugklappe (Heckklappe, Motorhaube etc.) angegeben werden.

DE 199 20 543 beschreibt ebenfalls eine elektromagnetisch betätigte Einflächenkupplung mit zwei stabilen stromlosen Schaltzuständen.

Diese Aufgabe wird erfindungsgemäß hinsichtlich der Schaltkupplung durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, einerseits, wie im Falle der DE 102 25 580 A1, einen ersten Permanentmagneten an dem Rotorteil anzuordnen und andererseits Mittel vorzusehen, welche auf die Ankerscheibe eine axiale, der Magnetkraft des ersten Permanentmagneten entgegengerichtete Kraft ausüben. Dabei sind der erste Permanentmagnet und die Mittel derart gewählt, daß die durch den Permanentmagneten und die Mittel auf die Ankerscheibe ausgeübte resultierende Kraft bei nicht bestromter Spule die Ankerscheibe gegen den Reibbelag des Rotorteiles drückt, wenn sich die Ankerscheibe in ihrer eingekuppelten Endstellung befindet und die Ankerscheibe gegen einen von dem Reibbelag des Rotorteiles axial beabstandeten Anschlag drückt, wenn sie sich in ihrer ausgekuppelten Endstellung befindet. Die elektrische Spule ist derart mit Strom beaufschlagbar, daß das dadurch erzeugte Magnetfeld die Ankerscheibe in Abhängigkeit von der Richtung des Stromes gegen die Rückstellkraft der Mittel oder des ersten Permanentmag-neten in ihre ein- oder in ihre ausgekuppelte Endstellung verschiebt.

Die erfindungsgemäße Schaltkupplung weist also den Vorteil auf, daß sie zwei stabile stromlose Zustände besitzt, wobei das Umschalten zwischen den beiden stabilen Zuständen jeweils lediglich durch einen die Spule beaufschlagenden Stromimpuls entsprechender Höhe, Zeitdauer und Richtung erfolgt.

Bei den Mitteln, welche auf die Ankerscheibe eine axiale, der Magnetkraft des ersten Permanentmagneten entgegengerichtete Kraft ausüben, kann es sich um mindestens einen zwischen der Ankerscheibe und dem Anschlag angeordneten zweiten Permanentmagneten handeln.

Die erfindungsgemäße Schaltkupplung kann vorteilhafterweise innerhalb eines einen Antriebsmotor und eine Fahrzeugtür oder eine Fahrzeugklappe verbindenden Antriebsstranges abgeordnet werden, wobei die in ihrer eingekuppelten Endstellung befindliche Ankerscheibe bei nicht bestromter elektrischer Spule aufgrund des Permanentmagneten mit einer Kraft gegen den Reibbelag des Rotorteiles gedrückt wird, die groß genug ist, damit die Fahrzeugtür oder Fahrzeugklappe in der jeweiligen beim Ausschalten der Schaltkupplung eingenommenen Position sicher stehenbleibt.

Mit der erfindungsgemäßen Kupplung ist es ferner auf einfache Weise möglich, durch Vorgabe eines entsprechenden Spannungs- bzw. Stromverlaufes eine "Übertragungsmomentenkurve" vorzugeben, d.h., die Schaltkupplung kann in unterschiedlichen Stellungen der Fahrzeugtür unterschiedliche Übertragungsmomente realisieren.

Weitere Einzelheiten und Vorteile der Erfindung ergeben sich aus den folgenden anhand von Figuren erläuterten Ausführungsbeispielen. Es zeigen:
Fig.1 eine im Schnitt dargestellte schematische Seitenansicht einer erfindungsgemäßen Schaltkupplung mit zwischen der Ankerscheibe und dem Rotor angeordneten federelastischen Mitteln;
Fig.2 eine Explosionsdarstellung der in Fig.1 wiedergegebenen Schaltkupplung, wobei die Einzelteile der Kupplung perspektivisch dargestellt sind, und
Fig.3 ein weiteres der Fig.2 entsprechendes Ausführungsbeispiel einer erfindungsgemäßen Schaltkupplung, wobei auf der dem Rotor abgewandten Seite der Ankerscheibe ein zweiter Permanentmagnet vorgesehen ist.

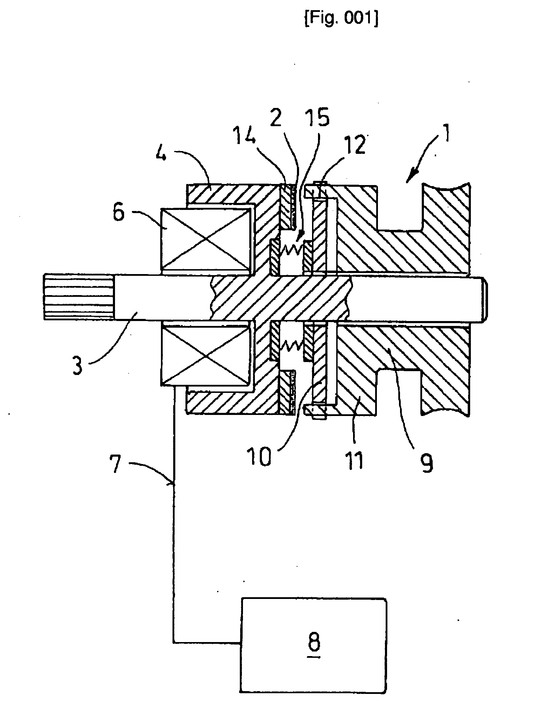

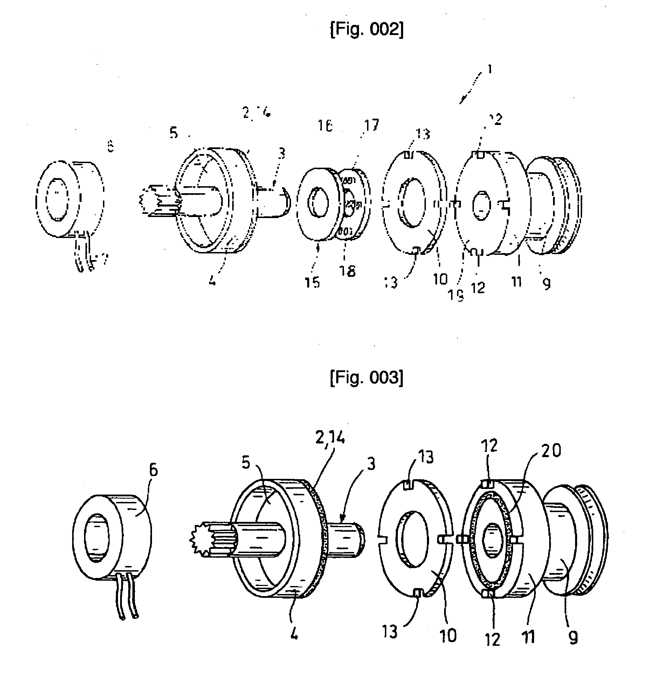

In den Fig.1 und 2 ist mit 1 eine nur schematisch und ohne Gehäuse dargestellte elektromagnetische reibschlüssige Schaltkupplung bezeichnet, die z.B. innerhalb eines Antriebsstranges zwischen einem nicht dargestellten Antriebsmotor und einer ebenfalls nicht dargestellten Heckklappe eines Kraftfahrzeuges anordbar ist.

Die Schaltkupplung 1 umfaßt ein mit einem Reibbelag 2 versehenes und mit einer ersten Welle 3 (z.B. der mit dem Antriebsmotor verbundenen Antriebswelle) drehfest verbundenes Rotorteil 4, welches auf seiner dem Reibbelag 2 abgewandten Seite eine Ausnehmung 5 besitzt, in der eine elektrische Spule 6 gehäusefest gelagert ist. Die Spule 6 ist über elektrische Leitungen 7 mit einer elektrischen Steuereinrichtung 8 verbunden.

Die Schaltkupplung 1 weist ferner eine drehfest, aber axial verschiebbar mit einer zweiten Welle 9 (Abtriebswelle) verbundene Ankerscheibe 10 auf. Hierzu ist die zweite Welle 9 fest mit einem Ankerscheibenträger 11 verbunden, welcher axiale Führungsteile 12 umfaßt, die in entsprechende nutenförmige Ausnehmungen 13 der Ankerscheibe 10 eingreifen.

An dem Rotorteil 4 ist parallel zu der elektrischen Spule 6 ein ringförmiger erster Permanentmagnet 14 angeordnet, auf dem in dem dargestellten Ausführungsbeispiel der Reibbelag 2 befestigt ist.

Zwischen der Ankerscheibe 10 und dem Rotorteil 4 ist ferner ein federelastisches Element 15 angeordnet, welches auf die Ankerscheibe 10 eine axiale, der Magnetkraft des ersten Permanentmagneten 14 entgegengerichtete Kraft ausübt. Dabei besteht das federelastische Element 15 aus zwei ringförmigen Endteilen 16, 17 und mehreren zwischen den Endteilen 16, 17 befindlichen Federelementen 18. Das erste ringförmige Endteil 16 stützt sich an dem Rotorteil 4 und das zweite ringförmige Endteil 17 an der Ankerscheibe 10 ab.

Der erste Permanentmagnet 14 und das federelastische Element 15 sowie der Verschiebeweg der Ankerscheibe 10 entlang der Führungsteile 12 des Ankerscheibenträgers 11 sind derart gewählt, daß die durch den ersten Permanentmagneten 14 und das federelastische Element 15 auf die Ankerscheibe 10 ausgeübte resultierende Kraft, bei nicht bestromter Spule 6, die Ankerscheibe 10 gegen den Reibbelag 2 des Rotorteiles 4 drückt, wenn sich die Ankerscheibe 10 in ihrer eingekuppelten Endstellung befindet, d.h. an dem Reibbelag 2 anliegt. In dieser Stellung sind also die durch die Federelemente 18 auf die Ankerscheibe 10 ausgeübten Kräfte wesentlich geringer als die auf die Ankerscheibe 10 wirkende Mag-netkraft des ersten Permanentmagneten 14.

Befindet sich die Ankerscheibe 10 bei nicht bestromter Spule 6 hingegen in ihrer ausgekuppelten Stellung, d.h. an dem durch die Vorderseite 19 des Ankerscheibenträgers 11 gebildeten Anschlag, so wird die Ankerscheibe 10 durch das federelastische Element 15 gegen den Anschlag 19 gedrückt, da die Federkräfte in diesem Fall größer sind, als die auf die Ankerscheibe 10 wirkende Magnetkraft des ersten Permanentmagneten 14.

Die Verschiebung der Ankerscheibe 10 in ihre ein- oder ausgekuppelte Stellung erfolgt mittels des durch die elektrische Spule 6 bewirkte Magnetfeld, wobei die Steuereinrichtung 8 jeweils lediglich einen relativ kurzen Stromimpuls erzeugt. So wird bei entkuppelter Schaltkupplung 1 die elektrische Spule 6 zum Einkuppeln der Schaltkupplung 1 mit einem ersten Stromimpuls beaufschlagt, der ein Magnetfeld verursacht, das gleichgerichtet mit dem Magnetfeld des ersten Permanentmagneten 14 ist und die Ankerscheibe 10 gegen die Kraft des federelastischen Elementes 15 in ihre eingekuppelte Endstellung verschiebt. Bei eingekuppelter Schaltkupplung 1 wird die elektrische Spule 6 zum Entkuppeln der Schaltkupplung 1 mit einem zweiten Stromimpuls beaufschlagt, der ein dem Magnetfeld des ersten Permanentmagneten 14 entgegengerichtetes Magnetfeld erzeugt, welches die Ankerscheibe 10 gegen die Kraft des ersten Permanentmagneten 14 in ihre ausgekuppelte Endstellung verschiebt.

Bei Verwendung der Schaltkupplung 1 in einer Anordnung innerhalb eines Antriebsstranges zur automatischen Betätigung der Heckklappe eines Kraftfahrzeuges (vgl. z.B. auch die eingangs erwähnte Druckschrift DE 102 25 580 A1) kann dann im ausgekuppelten Zustand der Schaltkupplung die Heckklappe im wesentlichen kraftfrei verschwenkt werden. Durch Erzeugung kurzer Stromimpulse mittels der Steuereinrichtung 8 kann die Heckklappe in unterschiedlichen Positionen festgehalten werden, ohne daß nach Erreichen dieser Positionen ein weiterer Strom fließen muß. Dabei ist die Magnetkraft des ersten Permanentmagneten 14 so groß zu wählen, daß die in ihrer eingekuppelten Endstellung befindliche Ankerscheibe 10 bei nicht bestromter elektrischer Spule 6 mit einer Kraft gegen den Reibbelag 2 des Rotorteiles 4 gedrückt wird, die groß genug ist, damit die Fahrzeugtür oder Fahrzeugklappe in der jeweiligen beim Ausschalten der Schaltkupplung 1 eingenommenen Position sicher stehenbleibt.

Befindet sich die Schaltkupplung 1 in ihrer eingekuppelten Stellung, kann zur Erhöhung des zu übertragenden Drehmomentes ein entsprechend hoher ständig fließender Strom mittels der Steuereinrichtung 8 durch die Spule 6 geschickt werden.

Die Erfindung ist selbstverständlich nicht auf das vorstehend beschriebene Ausführungsbeispiel beschränkt. So kann die Funktion des federelastischen Elementes beispielsweise auch durch einen zwischen der Ankerscheibe und dem Anschlag angeordneten zweiten Permanentmagneten erfüllt werden, sofern dessen Anziehungskraft auf die Ankerscheibe größer ist als die Anziehungskraft des ersten Permanentmagneten, wenn sich die Ankerscheibe in ihrer ausgekuppelten Stellung befindet.

Ein entsprechendes Ausführungsbeispiel einer derartigen Schaltkupplung ist in Fig.2 dargestellt. Dabei sind die gleichen Teile wie in Fig.3 mit den gleichen Bezugszeichen gekennzeichnet. Der ringförmig ausgebildete zweite Permanentmagnet ist mit dem Bezugszeichen 20 versehen.

### Bezugszeichenliste

- 1: Schaltkupplung
- 2: Reibbelag
- 3: erste Welle
- 4: Rotorteil
- 5: Ausnehmung
- 6: elektrische Spule, Spule
- 7: elektrische Leitung
- 8: Steuereinrichtung
- 9: zweite Welle
- 10: Ankerscheibe
- 11: Ankerscheibenträger
- 12: Führungsteil
- 13: nutenförmige Ausnehmung
- 14: erster Permanentmagnet
- 15: federelastisches Element, elastisches Element, Mittel
- 16,17: Endteile
- 18: Federelement
- 19: Vorderseite, Anschlag
- 20: zweite Permanentmagnet, Mittel

## Patentansprüche

1. Elektromagnetische reibschlüssige Schaltkupplung mit den Merkmalen:
a) die Schaltkupplung (1) umfasst ein mit einem Reibbelag (2) versehenes und mit einer ersten Welle (3) drehfest verbundenes Rotorteil (4), an dem eine elektrische Spule (6) angeordnet ist, sowie eine drehfest, aber axial von einer eingekuppelten in eine ausgekuppelte Endstellung verschiebbare mit einer zweiten Welle (9) verbundene Ankerscheibe (10);
b) an dem Rotorteil (4) ist ein erster Permanentmagnet (14) angeordnet;
c) die Schaltkupplung (1) umfasst Mittel (15; 20), welche auf die Ankerscheibe (10) eine axiale, der Magnetkraft des ersten Permanentmagneten (14) entgegengerichtete Kraft ausüben;
d) der erste Permanentmagnet (14) und die Mittel (15; 20) sind derart gewählt, dass die durch den ersten Permanentmagneten (14) und die Mittel (15; 20) auf die Ankerscheibe (10) ausgeübte resultierende Kraft bei nicht bestromter Spule (6) die Ankerscheibe (10) gegen den Reibbelag (2) des Rotorteiles (4) drückt, wenn sich die Ankerscheibe (10) in ihrer eingekuppelten Endstellung befindet und die Ankerscheibe (10) gegen einen von dem Reibbelag (2) des Rotorteiles (4) axial beabstandeten Anschlag (19) drückt, wenn sie sich in ihrer ausgekuppelten Endstellung befindet, und
e) die elektrische Spule (6) ist derart mit Strom beaufschlagbar, dass das **dadurch** erzeugte Magnetfeld die Ankerscheibe (10) in Abhängigkeit von der Richtung des Stromes in ihre ein/oder in ihre ausgekuppelte Endstellung verschiebt,
**dadurch gekennzeichnet, dass** es sich bei den Mitteln (20), welche auf die Ankerscheibe (10) eine axiale, der Magnetkraft des ersten Permanentmagneten (14) entgegengerichtete Kraft ausüben, um mindestens einen zwischen der Ankerscheibe (10) und dem Anschlag (19) angeordneten zweiten Permanentmagneten (20) handelt.

2. Schaltkupplung nach Ansprüch 1, **dadurch gekennzeichnet, dass** die zweite Welle (9) aussenseitig drehfest mit einem Ankerscheibenträger (11) verbunden ist, welcher axiale Führungsteile (12) umfasst, die in entsprechende nutenförmige Ausnehmungen (13) der Ankerscheibe (10) eingreifen.

3. Schaltkupplung nach einem der Ansprüche 1 oder 2, **dadurch gekennzeichnet, dass** das Rotorteil (4) auf seiner dem Reibbelag (2) abgewandten Seite eine Ausnehmung (5) aufweist, in welcher die Spule (6) mindestens teilweise angeordnet ist.

## Claims

1. Electromagnetic frictionally engaged clutch, **characterized in that**:
a) the clutch (1) comprises a rotor part (4), provided with friction lining (2) and with torque-proof connection to a first shaft (3), upon which an electrical coil (6) is arranged, as well as an armature disk (10), which is connected to a second shaft (9) and can be displaced in a torque-proof manner, but axially from a coupled end position to an uncoupled end position;
b) on the rotor part (4) is arranged a permanent magnet (14);
c) the clutch (1) comprises means (15;20) that exert an axial force opposing the magnetic force of the first permanent magnet (14);
d) the first permanent magnet (14) and the means (15;20) are selected in such a way that the resulting force exerted on the armature disk (10) by the first permanent magnet and the means (15;20) presses the armature disk (10) against the friction lining (2) of the rotor part (4), when a current is not passing through the coil (6), when the armature disk (10) is in the coupled end position thereof and when the armature disk (10) presses against an abutment (19) at an axial distance from the friction lining (2) of the rotor part (4) when it is in the uncoupled end position thereof, and
e) the electrical coil (6) can be activated with electricity in such a way that the magnetic field thereby produced displaces the armature disk (10), according to the direction of the current, into the coupled or uncoupled end position thereof, **characterized in that** the means (20), which exerts an axial force opposing the magnetic force of the first permanent magnet (14), embodies at least a second permanent magnet (20), arranged between the armature disk (10) and the abutment (19).

2. Clutch according to Claim 1, **characterized in that** the second shaft (9) is connected on the exterior in a torque-proof manner with an armature disk holder (11), comprising axial guide parts (12), which engages the corresponding groove-shaped recesses (13) of the armature disk (10).

3. Clutch according to one of the Claims 1 or 2, **characterized in that** the rotor part (4) exhibits, on its side facing away from the friction lining (2), a recess (5) in which the coil (6) is at least partially arranged.

## Revendications

1. Embrayage électromagnétique entraîné par friction, ayant les caractéristiques suivantes :
a) l'embrayage (1) comporte un rotor (4) qui est doté d'une garniture de friction (2) et est solidaire d'un premier arbre, et sur lequel est disposée une bobine électrique (6), ainsi qu'un disque d'induit (10) relié à un second arbre (9) dont il est solidaire en rotation, mais mobile axialement pour passer d'une position finale embrayée à une position finale débrayée ;
b) un premier aimant permanent (14) est disposé sur le rotor (4) ;
c) l'embrayage (1) comprend des moyens (15, 20) qui exercent sur le disque d'induit (10) une force axiale, dirigée dans le sens opposé à la force magnétique de l'aimant permanent (14),
d) le premier aimant permanent (14) et les moyens (15, 20) sont choisis de façon que la force résultante exercée par le premier aimant permanent (14) et les moyens (15, 20) sur le disque d'induit (10) comprime, la bobine (6) n'étant pas sous tension, le disque d'induit (10) contre la garniture de friction (2) du rotor (4) lorsque le disque d'induit (10) se trouve dans sa position finale embrayée, et comprime le disque d'induit (10) contre une butée (19) située à distance axiale de la garniture de friction (2) du rotor (4) lorsque le disque d'induit (10) se trouve dans sa position finale débrayée, et
e) la bobine électrique (6) peut être sollicitée en courant électrique de façon que le champ magnétique ainsi généré déplace le disque d'induit (10) en fonction du sens du courant vers sa position finale embrayée ou débrayée,
**caractérisé en ce que** les moyens (20) qui exercent sur le disque d'induit (10) une force axiale opposée à la force magnétique du premier aimant permanent (14) sont constitués d'au moins un second aimant permanent disposé entre le disque d'induit (10) et la butée (19).

2. Embrayage selon la revendication 1, **caractérisé en ce que** le second arbre (9) est relié solidaire en rotation du côté extérieur avec un support (11) de disque d'induit qui comporte des éléments de guidage axiaux (12) qui s'engagent dans des creux (13) en forme de gorge situés dans le disque d'induit (10).

3. Embrayage selon l'une des revendications 1 ou 2, **caractérisé en ce que** le rotor (4) présente sur son côté opposé à la garniture de friction un creux (5) dans lequel la bobine (6) est disposée au moins en partie.
